# EUROPEAN PATENT APPLICATION

(11) **EP 1 710 426 A2**
(43) Date of publication of application: **11.10.2006**
(21) Application number: 06005007.7
(22) Date of filing: 11.03.2006
(51) Int. Cl.: F02K 7/08, F23R 3/00

(54) **Combi-supersonic-adjusting-nozzle**

(30) Priority: 05.04.2005 DE 102005015585
(71) Applicant: Kaniut, Herbert Maximilian, 50374 Erftstadt (DE)
(72) Inventor: Kaniut, Herbert Maximilian, 50374 Erftstadt (DE)

(57) **Abstract**

The filed application is a supplement to a basic conception for a novel internal combustion engine with the name:, Injector-Centrifuge-Turbine-Engine (ICT-Engine) for road vehicles, and Injector-Centrifuge-Jet-Engine (ICJ-Engine) for aircraft.

The introduction of a supersonic injector in place of the turbine and the rotary compressor, and the introduction of a gas-centrifuge for decomposing of the mixed gases is disclosed.

In particular for aircraft, our presently used turbine-engines suffer from fatal turbine-blades crackings, which often results in aircraft crashes.
This can be eliminated by the novel engine.
- But also the automobilists would have a profit, by ca. 30 % reduction in fuel consumption, arising from removal of the engine cooling and engine friction.
The herewith filed application improves an essential component of the above mentioned novel engine, which is the Combi-Supersonic-Adjusting-Plug-Nozzle, fixing for it the following aims:
1) focusing of the jet stream;
2) increasing of the suction effect;
3) improvement of the design;
4) addition of a four-dimensional (4 - D) vectoring;
5) suppression of the engine sound.

Also the conventional plug-nozzle will be improved in the same manner, making it compatible with the novel Injector-Centrifuge-Turbine/Jet-Engine.

## Description

The invention relates to the novel internal combustion engine with the name: Injector-Centrifuge-Turbine-Engine (ICT-Engine) for road vehicles, and Injector-Centrifuge-Jet-Engine (ICJ-Engine) for aircraft, in accordance with my foregoing application-for an US-Patent No.: 10/757,596, and my foregoing application for a German patent No.: 103 02 041.1 - 13, which are representing the basis conception of the engine.

Brand new is the introduction of a gas-dynamic linear-compressor in the shape of a supersonic injector, which replaces the turbine and the rotary compressor. Added is also a gas-centrifuge, which decomposes the gases mixed in the injector, and which reduces the CO₂- content.

In particular for aircraft, our presently used turbo-aero-engines suffer from fatal fatigue-crackings of the high-heated and-loaded turbine blades. When a blade cracks, it destroys the interior of the engine, and the aircraft often crashes, with hundreds of burnt to death people. -This can be eliminated by the new Injector-Centrifuge-Jet-Engine, which neither has turbine blades nor compressor blades in the engine main tract.
- But also the automobilists would have a profit, by ca. 30 % reduction in fuel consumption, arising from removal of the engine cooling and engine friction.
- Whereas the application in hand improves an essential component of the above mentioned basic conception engine: the COMBI-SUPER-SONIC-ADJUSTING-NOZZLE, which will be further developed by additional inventive means. This application has a Prior Foreign Application in Germany No.: 10 2005 015 585.5 - 13, Day: April 5th, 2005.
   The combi-supersonic-adjusting-nozzle of said basic conception engine consists of a plug-nozzle and a Laval-nozzle, coaxially arranged in the nozzle plug. The ring-throat of the plug-nozzle is formed between the gas-jet discharge orifice 140 of the combustion chamber 2 and the central plug 182 of the nozzle, with the flow-direction through the ring throat conically from outside to inside, and flow direction through the Laval-nozzle straight on. The central plug consists of an inflow-funnel, a behind it positioned adjusting slider collet 4, and the through both these parts leading Laval-nozzle. The adjusting slider collet has radial supporting stays 152 which star-like are pointing to the outside, up to an operation ring positioned round about of the nozzle, and which keeps the central-plug in position; at which the radial inner portions of the stays are lying in the hot supersonic region of the jet, whereas the radial outer portions of the stays and the operation ring already are lying in the cold region of the inducted fresh-air flow. To the operation ring is attached the,mechanical operation apparatus of the nozzle. The whole above described aggregate is forward and rearward movable designed, in order to change geometrically the ring throat of the nozzle, and vary the gas flow area through the nozzle.
   (An information drawing of said basic conception , the Injector-Centrifuge-Jet-Engine, application No: 10/757,596, is enclosed as the last sheet of the drawings-FIG. X-, on which is supported this application).
   Starting from the above described Combi-Supersonic-Adjusting-Nozzle of the basic conception engine, it is the object of the present invention to provide an improved COMBI-SUPERSONIC-ADJUSTING-NOZZLE resulting in an increased efficiency and output capacity for all derivatives of the novel internal combustion engine.
   This object will be achieved by a closely cooperating package of inventive means, specified further below, for which will be fixed the following aims:
   1) focusing of the jet-stream, in order to get a higher compression;
   2) increasing of the sucktion effect, in order to get an increased mass-flow through the engine;
   3) design-improvement of the nozzle-operation apparatus;
   4) design-extension of the Combi-Supersonic-Adjusting-Nozzle to a four-dimensional (4-D) vectoring thrust-nozzle, in order to get an engine influencing the aircraft-maneuverability;
   5) suppression of the soundradiated from the engine, in order to get a more smooth running engine.
   Also the conventional plug-nozzle will be further developed and improved by the same package of inventive means, fixing for it also the same aims as described above, to make the conventional plug-nozzle also compatible with the novel Injector-Centrifuge-Jet/Turbine-Engines.

### DESCRIPTION OF THE DRAWINGS

FIG. 1 shows a long sectional view through the Combi-Supersonic-Adjusting-Nozzle in line with the foregoing application No.: 10/757,596, which according to the present invention is additionally provided with a supersonicflow guide-shell 145, a supersonicflow guide-Ring 146, and small supersonic auxiliary nozzles 148.
FIG. 2 shows a cross sectional view through the Combi-Supersonic-Adjusting-Nozzle according to line S - S of FIG. 1.
FIG. 3 shows the supersonic flow along the central plug 182, of the Adjusting-Nozzle, i.e. along the inflow-funnel 3 and adjusting slider-collet 4, prior to the installation of the additional inventive means.
FIG. 4 shows the pressure course of the supersonically flowing gas along the outer wall of the central plug 182, according to FIG. 3.
FIG. 5 shows three cross-sectional profiles of the supersonic flow along the bended central plug of the nozzle, FIG. 3.
   - However, the flow-pattern of FIG. 3; FIG. 4; and FIG. 5 occurs only, when the supersonically flowing gas is simultaneously expanding!
FIG. 6 shows scaled up a long sectional view through the small supersonic auxiliary nozzles 148, and the small supersonic gas-ducts 147 of the initial injector.
FIG. 7 shows the front end view of the small supersonic auxiliary nozzles of FIG. 6.
FIG. 8 shows the plan view of the small supersonic auxiliary nozzles and the small supersonic gas-ducts of FIG. 6.
FIG. 9 shows the long sectional view through the detachable ceramic inflow funnel 5/70 from the metallic adjusting slider-collet 4/69.
FIG. 10 shows the cross sectional view through the end of the adjusting slider-collet of the central plug 182, according to sectionline T-T of FIG.9.
FIG. 11 shows the long sectional view through the Combi-Supersonic-Adjusting-Nozzle according to FIG. 1, which additionally is equiped with a swivelling device for a four-dimensional (4-D) vectoring of the jet-stream.
FIG. 12 shows the cross-sectional view through the Combi-Supersonic-Adjusting-Nozzle and the means for the four-dimensional (4-D) vectoring of FIG. 11, according to the section line U-U. Specially is shown the twist-preventing device.
FIG. 13 shows the electro-hydraulic control scheme for the vectoring of the nozzle jet, according to FIG. 11 and FIG. 12. Shown is the control scheme e.g. for the elevator. For the rudder control serves an analogous second system, not shown here.
FIG. 14 shows the long sectional view through a conventional plug nozzle with the flow direction through the ring throat conically from inside to outside, which is further developed and improved with the help of the same package of inventive means as the nozzle of FIG. 1, also ; transforming it into a Combi-Supersonic-Adjusting-Nozzle according to the present invention.
FIG. 15 shows the cross sectional view through the conventional plug nozzle, which is further developed and improved, and transformed into a Combi-Supersonic-Adjusting-Nozzle according to the present invention, as ilustrated in FIG. 14. The sectional view is along the line V-V of FIG. 14.

### LIST OF PARTS

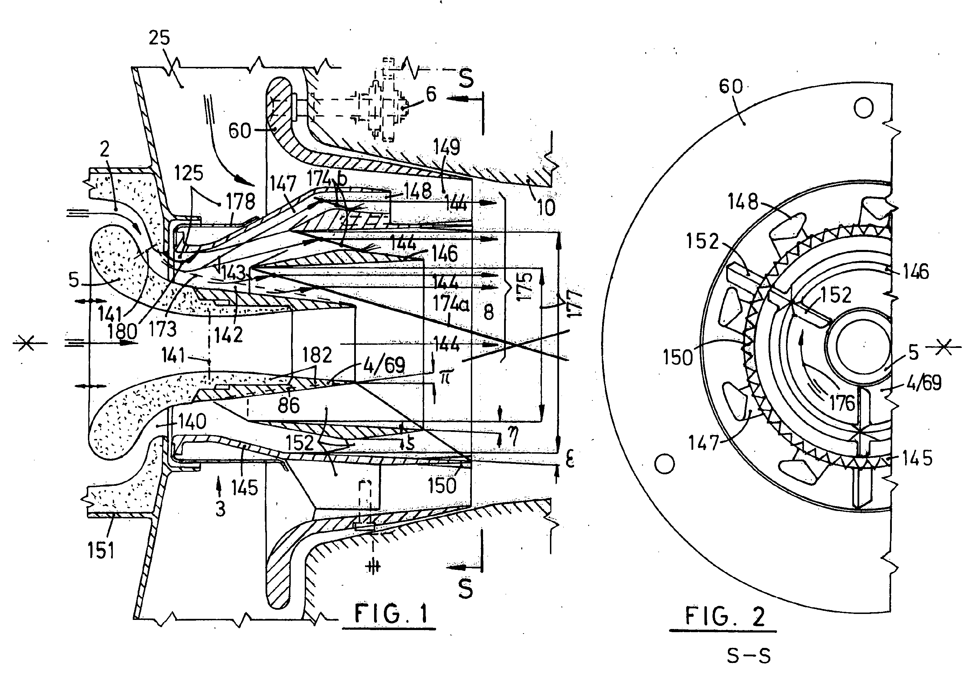

As a GUIDE through the complexity of the specification, refer the following list of parts and special signs more particularly to the drawings, wherein like reference numerals designate identical parts in each of the views from FIG. 1 through FIG. 15.
The reference numerals from 2 through 125 correspond with the reference numerals of the foregoing applications USA No.: 10/757,596 and Germany 103 02 041.1-13, on which is supported the present application.
Whereas the reference numerals beginning with 140 and the special signs are new numerals and signs of the present application.
2. Combustion chamber of the engine;
3. Combi-Supersonic-Adjusting-Nozzle of 2;
4. Adjusting slider-collet of 3, with radially arranged outer supporting stays;
5. I nflow-funnel of 3;
6. Operation apparatus for the longitudinal adjustement of 4;
8. Supersonic jet;
10. Supersonic shockwave compressor;
25. Induction port and air intake into the engine;
26. Swirl vanes in the induction port 25;
60. Operation ring of the Combi-Supersonic-Adjusting-Nozzle 3, to which are fastened the supporting stays of the slider-collet 4;
69. Adjusting slider-collet of the Combi-Supersonic-Adjusting-Propelling-Nozzle 85, with radially arranged outer supporting stays;
70. Inflow-funnel of 85;
85. Combi-Supersonic-Adjusting-Fropelling-Nozzle for an air-jet-propulsion, consisting of a plug-nozzle, and in it through the plug co-axially arranged Laval-nozzle
86. Locally recessed outside contour of the adjusting slider-collet 4, in each case on both sides of the supporting stays, in accordance with the area rule of the dynamics of compressible fluids;
87. Operation ring of the Combi-Supersonic-Adjusting-Propelling-Nozzle 85, to which are fastened the supporting stays of the sl ider-collet 69;
88. Operation apparatus for the longitudinal adjustement of the slider-collet of the propelling nozzle 85;
90. Locally recessed outside contour of the adjusting slider-collet 69;
124. Parting plane between the pressure gas producer and pressure gas utilizers;
125. Depression resp. pressure-free zone;

### NEW PARTS and special signs of the present application:

140. Gas-jet discharge orifice of the combustion chamber 2, resp. of the engine end housing;
141. Throat of the nozzle and sonic gas flow;
142. Portion of the supersonic gas flow,which remains close upon the wall of the adjusting slider-collet 4/69;
143. Portion of the supersonic gas flow, which obliquely departs from the wall of the adjusting slider-collet;
144. Supersonic jetstream;
145. Supersonic flow guide-shell;
146. Supersonic flow guide-ring;
147. Small supersonic flow gas-ducts, on the outside of the guide-shell 145;
148. Small supersonic auxiliary nozzles of the initial suction-injector 149;
149. Initial suction-injector in the form of a ring-gap;
150. Turbulence intensifier in the form of a corrugation, corrugation parallel to the flow;
151. End-housing of the jet engine (ICJ-Engine);
152. Radially arranged outer supporting stays of the adjusting slider collet 4 and 69;
153. Sidewards directed evading flow, in accordance with the area rule of the dynamics of compressible fluids;
154. Compression / tension struts with spherical joint-ends, of the twist-preventing device;
155. Screw bolts of the detachable ceramic inflow funnel 5 and 70;
156. F low-conformal nuts of the detachable ceramic inflow funnel 5/70; 158. Swivel arms for the four-dimensional (4-D) vectoring of the jet-stream, three or more arms with spherical joint ends, the arms arranged in a pyramidal shape;
159. Two swivelling arms of the twist-preventing device with gearwheel-segments. The arms are swivellingly fastened to the forward cold-end of the supersonicflow guide-shell 145, and the two gearwheel-segments are meshing with themselves;
160. Swivelling-center of the four-dimensional (4-D) vectoring of the thrust -nozzle;
161. Actuating-cylinders of the electro-hydraulic control system of the thrust-nozzle vectoring;
162. Swivelling angles of the four-dimensional (4-D) vectoring of the jet-stream;
163. Servomotors with brakes;
164. Hydraul ic pumps for the jet-stream vectoring;
165, Hydraulic oil-supply-,
166. Contact slide;
167. Relays;
168. Electric lines for the "Fly-by-Wire"- system;
170. Control stick of the pilot;
171. Connection to the elevator (resp. to the rudder);
172. Direction of flight;
173. 1 - Isobar = line of the environmental pressure;
174a.Conical shockwave (oblique shockwave in circular form) of the guide ring 146;
174b.Conical shockwave of the guide shell 145, and oblique shockwaves in the small auxiliary nozzles 148;
175. Supersonic streamlines;
176. Augmentation of the jet-rotation;
177. Cylindrical wrapping, round about the longitudinal axes of the nozzle;
178. Sheetmetal insulation (eventual also aluminium-titanat insulation);
180. Jet-border being turned round in a narrow curved-path;
181. Housing of the conventional plug-nozzle, integral with the engine, being cylindrical or slightly divergent;
182. Central plug of the plug-nozzle 181 , consisting of 4 and 5, or 69 and 70;
183. Inflow opening of 182;
184. Cross-connection of the hydraulic lines;
   R. Radius of the spherical surface;
   ε Internal divergence-angle of the supersonicflow guide-shell 145;
   ξ External convergence angle of the trailing-edge of the supersonicflow guide ring 146;
   η Internal divergence angle of the supersonicflow guide ring 164;
   ℓ Radial coordinate;
   X - X Longitudinal axis of the nozzle and of the engine;
   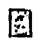 Technical ceramics;
   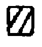 Metal.

### DESCRIPTION OF THE PREFERRED EMBODIMENTS

PHYSICAL CRITERION: A supersonically flowing gas stream can on a curved wall only so long be continually turned round, as long as the flowing gas is expanding. - When however the expansion is finished, a supersonically flowing gas stream can solely by oblique shockwaves be sharp edged deflected. On this criterion are founded the hereinafter submitted inventive means of the present application.

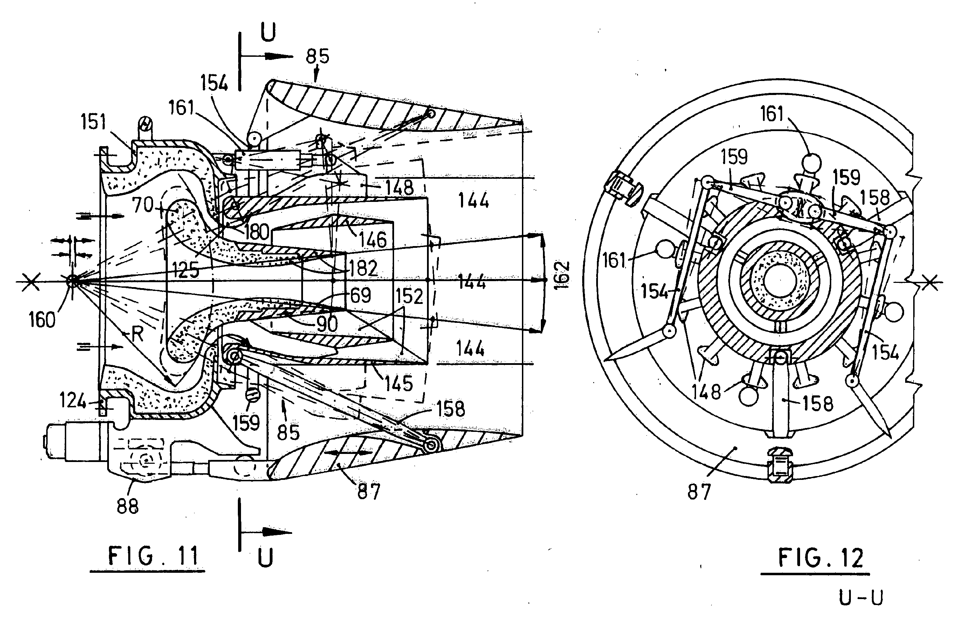

The Combi-Supersonic-Adjusting-Nozzle of FIG. 1; FIG. 2 respectively FIG. 11 and FIG. 12 proceeds from the combi-supersonic-plug-nozzle of my novel Injector-Centrifuge-Turbine/Jet-Engine (Application No.: 10/757,596), and according to the present invention will be combined with:
a supersonic-flow guide-shell 145, a supersonic-flow guide-ring 146, and several small supersonic auxiliary nozzles 148. The s.f-guide-shell * has preferred a round cross-section, surrounds the adjusting slider collet 4/69 of the central nozzle-plug 182, is at the stream entrance on the inside strongly divergent, after an inside coaxial wall-inclination cylindrical or slightly divergent, divergence angle ε , and has at the stream exit a turbulence intensifier 150 in the shape of a rising corrugation, the corrugation grooves parallel to the flow. The function of the s.f. guide-shell 145 is the focusing of the jet stream. The s.f.guide-ring 146 also surrounds the adjusting slider collet 4/69 of the central nozzle plug 182, has also preferred a round cross-section, is positioned inside of the s.f.guide-shell, and has in the longitudinal section the shape of a flat triangle: pointed at the leading edge, also pointed at the trailing edge, and blunt at the middle angle with a slightly rounding. The s.f. guide-ring is on its inside slightly divergent, divergence angle η on the leading autside edge also divergent, with a divergence angle nearly parellel to the arriving supersonic flow 143, and it is at the trailing edge convergent, convergence angle ξ. The function of the s.f.-guide- ring 146 is to support the focusing of the jet-stream, by catching the supersonic gas jet-part 143, which farther downward obliquely flows away from the adjusting slider collet 4/60; and both means: the s.f.guide-shell 145 and the s.f.guide-ring 146 are guiding more effective the jet into the nozzle-and engine main flow-direction.
The small supersonic auxiliary nozzles 148 are fastened to the ends of small supersonic gas-ducts 147, which are star-like positioned round about on the outside of the s.f.guide-shell 145. The small supersonic auxiliary nozzles 148 are behind their inside shockwaves increasing the cross-sections, to supersonically accelerate the flow, and are additionally sidewards widened, in order to correspond with the area rule of the gas dynamics, what reduces the shock-losses. Said nozzles have also spiral-angle positions 176, augmenting the jet rotation. The function of the small supersonic nozzles 148 is to admit an initial suction-injector 149 in the shape of a ring-gap, round about the inventive nozzle, to intensify the suction effect. The same small supersonic auxiliary nozzles 148 are also adopted for the propelling nozzle 85 at the rear end of the engine, in order to suppress the engine sound radiated from the engine, by producing a slower jacket-flow round about the jet stream.
* "s.f-" means: supersonic flow

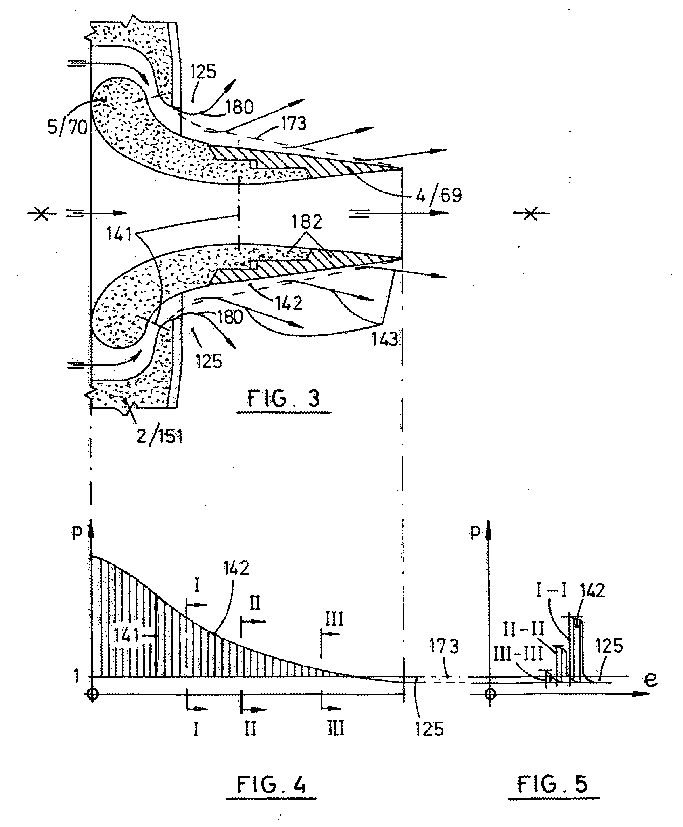

Hereinafter will be disclosed more particularly the flow characteristics and the operation mode of the above described nozzle means. The gas-flow in the nozzle, prior to the installation of the inventive means, is identified thereby that, FIG. 3, after the gas has passed the ring throat of the nozzle, and is turned into the main flow direction of the nozzle, one portion of the flow 142 remains close upon the fillet wall of the adjusting slide-collet 182, due to the gas mass-inertia at supersonic speed, what results in the pressure-course 142 on the slide-collet wall, as shown in FIG. 4 resp. FIG. 5, whereas a second portion of the flow 143 more violent expands, and obliquelly flows outward. The outwardly flowing gas portion 143 forms himself an abrupt pressure drop, as shown in the cross-sectional profiles of FIG. 5. And from this pressure drop flows the gas outwardly with further increasing supersonic speed.

This flow pattern is the virtual basis for shaping the package of the inventive means, because the outwardly flowing gas portion will be utilized, to boost the engine injector effect, and to increase the pressure in the engine.
Additionally the outwardly flowing gas portion 143 expanses near of the gas discharge orifice 140 of the engine housing very suddenly and violently, and forms a narrow curved path 180 (like a toroidal vortex) with such a flowing speed that the gas-mass inertia - centrifugal forces produce in the center of said curved path 125 a pressure-free or depression zone (!)

In the supersonic flow guide shell 145 the coaxial inside wall inclination, and the inner inclinations of the small auxiliary nozzles 148 are triggering obl ique shockwaves 174b. Also the leading edge of the supersonic flow guide ring 146 trigers the shockwave 174a. All these schock-waves together are guiding the flow into the nozzle main flow direction.

Since the s.f. guide shell 145 and the s.f. guide ring 146 have internal converging wall-angles ε and ζ, and the s.f. guide ring on the outside the diverging wall -angle ξ, and additionally the auxiliary nozzles 148 have also diverging endparts, the flow repeatedly expands after the shockwaves, what results in an additional nozzle thrust

The supersonic flow guide shell 145 and the supersonic flow guide ring 146 are by means of radially arranged supporting stays 152 fastened to the operation ring 60/87, at which the middle portions of the stays, the s.f. guide ring 146, and the s.f. guide shell 145 are lying in the hot supersonic flow of the nozzle, whereas the outer portions of the stays 152, the small supersonic auxiliary nozzles 148 and the operation rings 60/87 are already lying in the cold subsonic air-flow.
The whole above described aggregate is forward and rearward movable designed, by which the ring-throat of the nozzle is geometrically changeabl e, and the nozzle flow cross-section variable. For this purpose serves an operation apparatus 6/88, consisting of at least three gear-spindles or at least three rack-and pinion gears, which is also-lying in the cold subsonic air-flow, and which handles and moves the operation rings 60/87 with the nozzle aggregates.

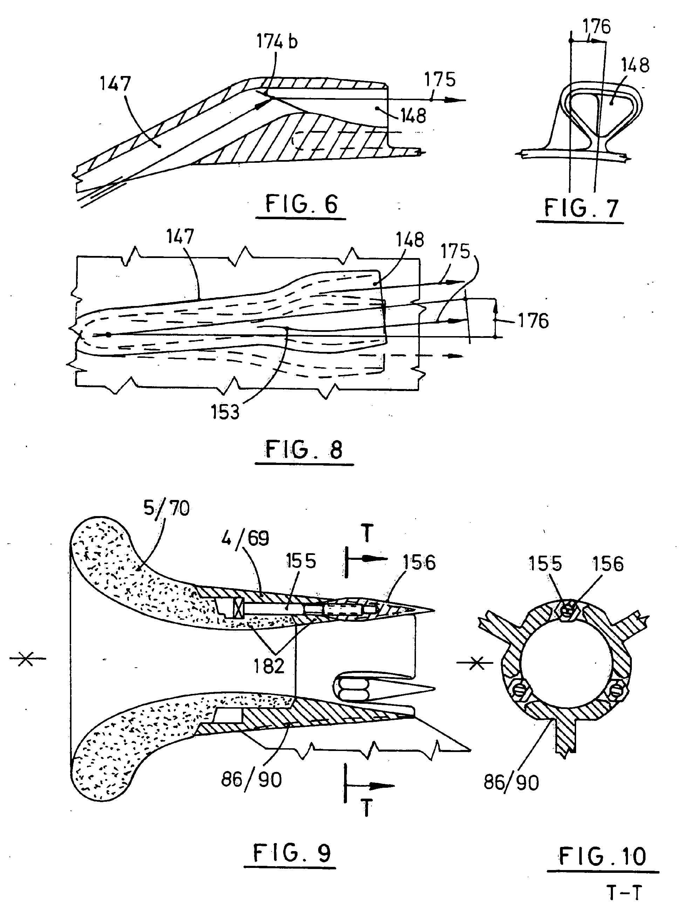

The inflow-funnels 5/70 are made of technical ceramics, and are detachable fastened to the adjusting sl ide-collets 4/69. For this purpose are used screw bolts 155, positioned parallel to the axis of the nozzle, and flow-conformal nuts 156, as shown in FIG. 9; FIG. 10 and FIG. 14.

The additional swivelling device for a four-dimensional (4 - D) vectoring of the jet stream of the COMBI-SUPERSONIC-ADJUSTING-NOZZLE, according to FIG. 11 and FIG. 12, is provided to make the jet-stream of the Injector-Centrifuge-Jet-Engine deflectable to all lateral directions 162, in order to get an engine influencing the aircraft maneuverability.

For this purpose the inner nozzle aggregate, consisting of the central plug 182, with the inflow funnel 70 and adjusting slider collet 69, supersonic flow guide-shell 145, supersonic flow guide-ring 146, and supporting stays 152, is flexibly joined with the operation ring 87. The specified aggregate is on its forward cold end connected with the operation ring 87 by means of at least three swivel arms 158 with spherical joint-ends; said swivel arms being arranged in the shape of a pyramid, with the pyramidal apex pointing against the flow direction. There is also provided a twist-preventing device with two swivelling arms 159, of which each arm has on its one end a gearwheel-segment. Said gearwheel-segments are attached to the inward sides of the arms, and the two gearwheel-segments are meshing with each other; this occuring in a small housing, which is also fastened to the forward cold end of the supersonic flow guide-shell 145. The two swivelling arms 159 are so arranged that when one arm swings out like a clockwise rotation, the other arm swings out like an anticlockwise rotation, and vice versa. Said swivelling two arms 159 are on their outwardly pointing ends connected with compresion/tention struts 154 by means of spherical joints. The struts stand perpendicularly or near perpendicularly to the two said swivelling arms, and are at their other ends connected with the operation ring 87, also by means of spherical joints.

All these elements taken together form the vectoring nozzle aggregate which is able to be swiveled in all directions around the swivelling center 160, without the pyramidal group of the swivel arms 158 would collapse. At which aggregate the small longitudinal oscillations of the swivelling center 160 will automatically be equalized by the operation apparatus 88.

In the ring-gap between the end-housing. 151 of the jet engine and the supersonic flow guide-shell 145, that is in the dividing slit between the immovible part and movible part of the vectoring nozzle, is no fire-proof gasket necessary!
This is an extraordinary advantage of the presented jet-vectoring nozzle, because all other, and hitherto known vectoring nozzles imperatively require such fire-proof gaskets, which are expensive and very troublesome in practical operation. - The inventive vectoring nozzle can dispense with said fire-proof gasket, originally utilizing the gas mass-inertia at supersonic flow.

At the inventive nozzle-design the expanding hot gas-jet, which is discharged by the end-housing 151 of the jet-engine, triggers shortly after the ring throat a narrow curved path 180, which due to the high speed and the mentioned gas mass-inertia produces in the center of said curved path a pressure-free or depression zone, as already specified in connection with FIG. 3; FIG. 4, and FIG. 5. Now, said pressure-free zone will be intentionally placed between the mentioned immovable part and movable part of the nozzle, by which between the two said parts do not exist any outwardly urging pressure potential, and thus no fire-proof gasket is required! I n addition, the ring throat of the nozzle is located on a spherical surface with the radius "R", which enables movements of the vectoring nozzle aggregate to all side directions; - on the contrary to presently known other vectoring nozzles, which are variable only within one plane.

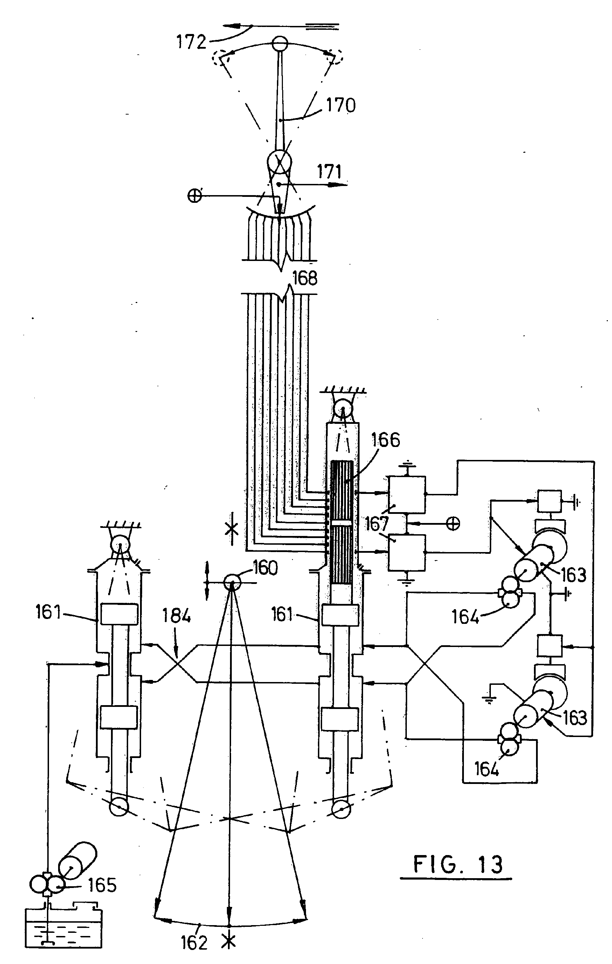

For operation of the above specified Combi-Supersonic-Adjusting-Nozzle as a (4-D) vectoring nozzle, is provided an electro-hydraulic operation regime, working according to the "Fly-by-Wire"- principle. The hydraulic actuating cylinders 161 are on one side connected with the supersonic flow guide-shell 145, and on the other side with the end-housing 151 of the jet engine. There are at least 4 actuating hydraulic cylinders, which are provided in two pairs of two cylinders, in each case on two planes going through the longitudinal axis of the nozzle. These planes are standing perpendicularly to each other. One pair of cylinders for swivelling the nozzle to the left and right side, and the second pair of cylinders for swivelling the nozzle upwards and downwards . Said cylinders are bilaterally effective. In each of said planes the hydraulic lines of the cylinders are crosswise connected 184, so that one piston side of one cyl inder is connected with the other piston side of the other cylinder FIG. 13. By said crosswise connection cooperate the two mentioned cylinders in this way that one piston rod has push-forces, and the other piston-rod pull-forces, or vice versa. This crosswise line-connections of the cylinders have the advantage that the lateral swivelling movements of the vectoring nozzle aggregate are independent of the linear adjustements of the thrust nozzle, accomplished by the operation apparatus 88.

To complete the Combi-Supersonic-Adjusting-Nozzle, also the conventional plug nozzle has to be taken into consideration, making it compatible with the new Injector-Centrifuge-Turbine/Jet-Engine, by applying the same inventive package of means, as specified above.

The conventional plug nozzle consists of: a housing 181 , which is integral with the engine, and cylindrical or slightly divergent in shape, but which has at the stream entrance a constriction, after which the inside diameter conically alters into said cylindrical or slightly divergent shape. Furthermore comprises said conventional plug nozzle a central nozzle plug 182, in the shape of a zeppelin, being round at the stream entrance and convergent at the stream exit. Between said entrance constriction of the housing and the entrance-rounding of said nozzle plug 182 is formed the nozzle-ring throat, with the flow direction through the throat conically from inside to outside, after which the flow is guided into the general axial flow direction of the nozzle, by said cylindrical or slightly divergent part of the housing 181 .

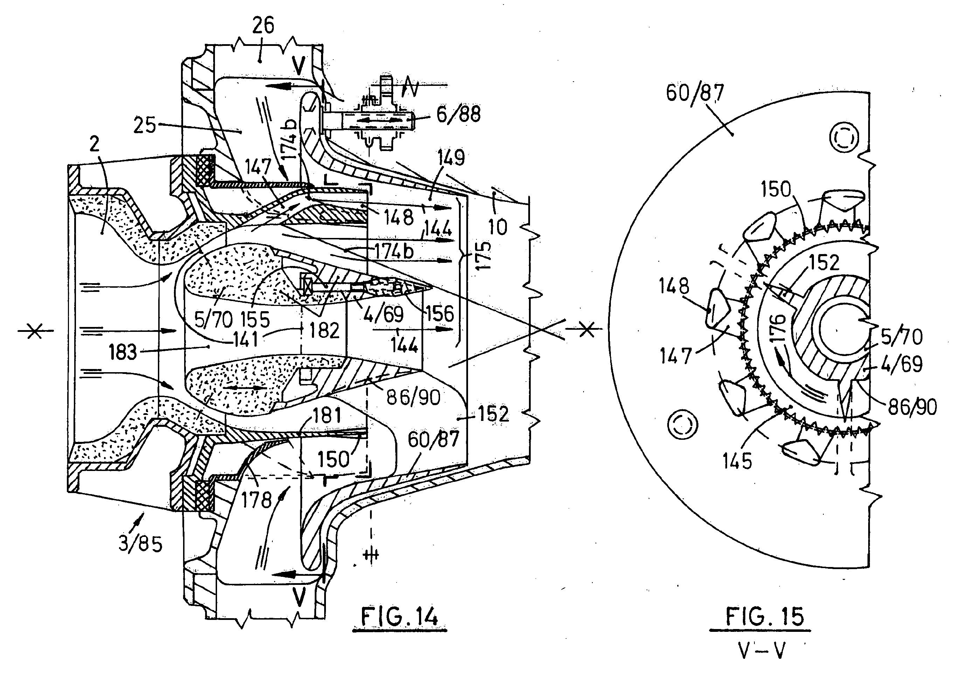

This basic design of the conventional plug nozzle will now be improved by addition of the above specified package of inventive means, to make it compatible with the new Injector-Centrifuge-Turbine/Jet-Engine, FIG. 14 and FIG. 15.

The central nozzle plug get an axial Laval-nozzle, going straight through, from the stream entrance to the stream exit of the plug. The central plug will be devided in two parts, the forwardly positioned inflow funnel 70, with the inflow opening 183 for the Laval-nozzle, and the rearwardly positioned adjusting slider-collet 69. The Laval-nozzle is dimensioned for the idle-operation of the engine. The adjusting slider collet get radial supporting stays 152, which star-like are pointing to the outside, where they are attached to an also added operation ring 87, positioned round about of the nozzle, and which together keep the central plug in position. The outside contour of the adjusting slider collet 69 get at the starting points of said supporting stays, on both sides of each stay, local recessions 90, in accordance with the area rule of the dynamics of compressible fluids.
At this design the central plug and the radial inner portions of said stays are lying in the hot supersonic region of the jet, whereas the radial outer portions of the stays and the operation ring already are lying in the cold region of the inducted fresh air flow. To the operation ring 87 is attached an also newly added mechanical operation apparatus for the nozzle. The whole above specified aggregate is forwardly and rearwardly movable designed, in order to geometrically change the ring throat of the nozzle, and vary the gas flow area through the nozzle.

The housing of the nozzle get, at the stream exit, a turbulence intensifier 150, with the shape of a rising corrugation, the corrugation grooves lying parallel to the flow.

The additional small supersonic auxiliary nozzles 148 are fastened to the ends of small supersonic gas-ducts 147, which are star-like positioned round about on the outside of the nozzle housing 181. The small supersonic auxiliary nozzles 148 are of the same design as specified on sheet 10 of this description, and as shown in FIG. 6; FIG. 7; and FIG. 8. The auxiliary nozzles are behind their inside shockwaves increasing their cross-sections, to supersonically accelerating the flow, and are additionally widened sidewards, in order to correspond with the area rule of the gas dynamics, what reduces the shock losses. Said nozzles have also spiral-angle positions 176, augmenting the jet rotation. The function of the small supersonic nozzles 148 is to admit an initial suction-injector 149 in the shape of a ring-gap, round about the inventive nozzle, to intensify the suction effect of the engine. The small supersonic auxiliary nozzles 148 are also adopted for the propelling nozzle 85 at the rear end of the engine, in order to suppress the engine sound radiated from the engine, by producing a slower jacket-flow round about the jet stream.

The inflow funnels 5/70 are made of technical ceramics, and are detachable fastened to the adjusting slider collets 4/69. For this purpose are used screw bolts 155, positioned parallel to the axis of the nozzles, and flow-conformal nuts 156, as schown in FIG. 14. The ceramic inflow funnels 5/70 should be made of a heat-conducting material, e.g. of SiC, by which the inflow funnels get the capacity to transport the absorbed heat to the rearwardly expanding gases, what thermodynamically increases the efficiency.

All above specified Combi-Supersonic-Adjusting-Nozzles are also provided for Rocket-Engines.

Although preferred embodiments of the invention have been described in the foregoing detailed description and illustrated in the accompanying drawings, it will be understood that the invention is not limited to the embodiments disclosed, but is capable of numerous rearrangements, modifications and substitution of parts and elements without departing from the spirit of the invention. Accordingly, the present invention is intended to accomplish such rearrangements, modifications and substitution of parts and elements as fall within the spirit and scope of the appended claims.

## Claims

1) The Combi-Supersonic-Adjusting Nozzle is an improved adjustable Combi-Flug/Laval-Nozzle for the novel I njector-Centrifuge-Turbine-Engine (ICT-Engine) and the I njector-Centrifuge-Jet-Engine (ICJ-Engine) and German application No. 103 02 041.1-13 according to my US-application No.: 10/757,596,
2) the combi-supersonic-adjusting-nozzle consists of a gas-jet discharge orifice (140) of the combustion chamber, the central plug (182), the operation ring (87), several supporting stays (152), and the operation apparatus (6),
3) said central plug consists of an inflow-funnel (5/70), an adjusting slider collet (4/69), and the Laval-nozzle, coaxially arranged in the nozzle plug,
4) said gas-jet discharge orifice (140) forms together with the central plug (182) the ring throat of the nozzle with the flow-direction through the ring throat conically from outside to inside, which flow being further turned round into the main flow direction of the engine and conducted parallel,
5) the nozzle comprises further a mechanical operation apparatus (6), which is positioned outward of the nozzle,
6) said adjusting slider collet (4/60) has several star-like radially arranged outer supporting stays (152), which are pointing outwards, and are fastened to an operation ring (60/87), surrounding the nozzle, at which design said supporting stays are keeping the central-plug in position,
7) at said design, said central nozzle plug (182), said slider collet (4/69), and the radial inner portions of said stays (152) are lying in the hot supersonic region of the flow, whereas the radial outer portions of said stays are already lying in the cold region of the inducted fresh air flow,
8) the said mechanical operation apparatus (6) is attached to said operation ring (60/87), and moves forwardly and rearwardly the described aggregate, comprising said central plug (182), supporting stays (152), and operation ring (60/87), in ordet to change geometrically the ring throat of the nozzle, and vary the gas flow area through the nozzle,
the IMPROVEMENT comprising:
9) said plug-nozzle and Laval-nozzle being optimized by a closely cooperating package of inventive means for focusing of the jet-stream,
10) said package of inventive means for focusing of the jet -stream comprising: an additional supersonic flow guide-shell (145), an additional supersonic flow guide-ring (146), and several additional small supersonic auxiliary nozzles (148),
11) said supersonic flow guide shell (145) being prefered circular in cross-section, surrounding said adjusting slider collet (4/69), being at the stream entrance on the inside strongly divergent, and after an inside coaxial wall-inclination, cyl indrical or slightly divergent, divergence angle ε ; the function of the supersonic flow guide shell (145) being the focusing of the jet stream,
12) said supersonic flow guide shell (145) having at its stream exit a turbulence intensifier (150), in the shape of a rising corrugation, with corrugation grooves parallel to the flow,
13) said supersonic flow guide ring (146) being also prefered circular in cross section, also surrounding the adjusting slider collet (4/69) of the central nozzle plug (182), and being positioned inside of the supersonic flow guide shell,
14) said supersonic flow guide ring (146) having the function of supporting the focusing of the jet stream, by catching the supersonic gas flow-part (143), which farther downward obl iquely flows away from said adjusting slider collet (4/60), and both means: said guide shell (145) and said guide ring (146) are focusing and guiding more effective the flowing gas stream into the nozzle main flow direction, by their inner oblique shockwaves (174a and 174b),
15) said supersonic flow guide ring (146) having in longitudinal section the shape of a flat triangle: pointed at the leading edge and pointed at the trailing edge, and blunt at the middle angle, with slightly rounding,
16) said guide ring (146) being in its inner opening slightly divergent, divergence angle η, being on the leading outside adge also divergent, with a divergence angle nearly parallel to the arriving supersonic flow (143),
17) said supersonic flow guide ring (146) being at the outer trailing end convergent, convergence angle (ξ), by which between said guide shell (145) and said guide ring (146) is formed a diverging ring slot: (ε + ξ),
18) said supersonic, flow guide ring (146) and said adjusting slider collet (4/69) with convergence angle (π) is also forming a diverging ring slot: (η + π),
19) both said diverging ring slots having the funktion again to expand the gases, being in said shockwaves (174a and 174b) partially compressed, in order to increase the supersonic speed in the nozzle, and produce an additional thrust ,
20) said supersonic flow guide shell (145) and said supersonic flow guide ring (146) being by means of said supporting stays (152) also connected with said operation ring (60/87), to which is connected said operation apparatus (6), at which design said guide shell (145) and said guide ring (146) and again said central plug (182), and said radial inner portions of said stays (152) are lying in the hot supersonic region of the flow, whereas the radial outer portions of said stays and the operation ring (60), as well as the operation apparatus (60/88) are again lying in the cold region of the inducted fresh air flow,
21) said described aggregate comprising said central plug (182), supporting stays (152), guide shell (145), guide ring (146), said small supersonic auxiliary nozzl es (148), and operation ring (60) now commonly being moved forwardly and rearwardly, in order to change geometrically the ring throat of the nozzle, and vary the gas flow area through the nozzle,
22) said small supersonic auxiliary nozzles (148) being arranged on the ends of small supersonic flow gas ducts (147), which star-like are positioned on the outside of said supersonic flow guide shell (145),
23) said small supersonic fl ow gas ducts (147) being inclined toward the main flow direction of the nozzle, and being fed by the portion of the supersonic gas flow (143), which obliquely departs from the central plug,
24) in said small auxiliary nozzles (148) the flow is also deflected into the main flow direction of the nozzle by small oblique shockwaves (174b), and parallel straightened,
25) after said small oblique shockwaves (174b) in said small auxiliary nozzles (148), said small nozzles being sidewards widened, to enable sideward directed evaiding flows (153), in accordance with the gas dynamics,
26) in said small auxiliary nozzles (148) the gas flow expands and accelerates supersonically,
27) said small auxiliary nozzles (148) admitting an initial suction injector (149), being formed as a ring-gap between said guide-shell (145) and said operation ring (60/87), to intensify the suction effect of the engine,
28) said small auxiliary nozzles (148), at the propelling nozzle (85) for an air-jet propulsion,produces a slower jacket-flow round about the jet-stream, in order to suppress the engine sound, radiated from the engine,
29) said Combi-Supersonic-Adjusting-Nozzle being also provided for rocket engines, which are also internal combustion engines, operating with a continually flowing gaseous working fluid, and having a continuous combustion.

2. Combi-Supersonic-Adjusting-Nozzle with the same package of inventive means as Claim 1, but further IMPROVED by the following additional features:
1) Said inventive nozzle of claim 1 being also provided as a four dimensional (4 - D) vectoring nozzle, making the jet-stream deflectable to all lateral directions (162), in order to get an aero-engine influencing the aircraft maneuverability, for which said nozzle is specially suitable, by two characteristic features:
a) the ring throat of the nozzle is located on a spherical surface, which enables swivelling motions to all lateral directions;
b) the inventive combi-supersonic-adjusting-nozzle do not require any fire-proof gasket between the end housing of the jet engine (151) and the supersonic flow guide shell (145) of the nozzle (85), which is in the dividing slit between the immovible part and movible part of the vectoring nozzle;
the secondly named feature become feasible, by an originally utilizing of the gas mass inertia at supersonic flow speed, while at the inventive nozzle design the hot gas jet, coming out of and expanding from the gas discharge orifice (140), shortly after the ring throat of the nozzle being turned round in a narrow curved path (180), which due to the high speed is producing a pressure free or depression zone (125) in the center of said curved path,
2) said dividing slit between the immovible and movible part of the nozzle being intensionally laid into said pressure free zone (125), by which in this slit do not exist any pressure potential, and therefore no fire-proof gasket is required,
3) said nozzle as a combi-supersonic-adjusting-and vectoring-nozzle being provided with a swivelling device, which is able to deflect the jet stream to all lateral directions (162), producing at aircraft lateral control impulses for flight maneuvers, resp. when the nozzle is turned downwards during starting and landing proceedings, producing an increased lift.
4) said swivelling device comprising at least three swivelling arms (158) with spherical joint ends,
5) said swivelling arms (158) being arranged in a pyramidal shape, and being installed between the forward cold end of the supersonic flow guide shell (145) and the rear end of the operation ring (87),
6) the pyramidal apex pointing against the flow direction in the nozzle,
7) said vectoring nozzle being also provided with a twist-preventing device, having two swivelling arms (159), of which each arm has on its inwardly pointing arm-end an attached gearwheel segment, and then both said gearwheel segments are meshing with each other in a small housing, being attached to the forward cold end of the supersonic flow guide shell (145),
8) said twist-preventing device additionally having two compression/tension struts (154) with spherical joint ends, connecting movable the outer ends of said swivelling arms (159) with said operation ring (87),
9) the complete aggregate of said vectoring nozzle, comprising said central plug (182), with inflow funnel (70), adjusting slider collet (69), and Laval-nozzle, radial supporting stays (152), supersonic flow guide ring (146), supersonic flow guide shell (145), swivel arms (158), and twist preventing device (154; 159), being tiltable (162) connected with the end housing (151) of the engine, with swivelling possibilities round about the center (160), and the same aggregate being also forwardly and rearwardly adjustable by said operation apparatus (88), by which the ring throat of the nozzle is, analogous to Claim 1, geometrically changeable, and the nozzle flow cross-section variable,
10) said swivelling motions of said combi-supersonic-adjusting-and-vectoring-nozzle being actuated by at least four cylinders (161), positioned parallel to the longitudinal axis of the nozzle, and occupying the corners of a square, that lies perpendicularly to said longitudinal axis,
11) said actuating cylinders being preferred hydraulic cylinders, which are connecting said supersonic flow guide shell (145) with said end-housing of the engine (151),
12) said cylinders (161) being bilataral effective, and the hydraulic pipelines being cross-connected (184) between said cylinders, so that during application of one piston side of one cylinder, simultaneously also the other piston side of the other cylinder being applied, and vice versa,
13) by said cross-connection of said cyl inders said swivelling motions of the vectoring nozzle being independent of said longitudinal adjusting motions of the nozzle,
14) said actuation of the combi-adjusting-and-vectoring-nozzle being provided to be controlled by means of the "Fly-by-Wire" principle (170; 168; 166; 161),
15) said combi-supersonic-adjusting-and-vectoring-nozzle being also provided for rocket engines.

3. Combi-Supersonic-Adjusting-Nozzle according to claim 1 wherein:
1) said ceramic inflow funnel (5/70) and said adjusting slider collet (4/69) having a detachable connection, and screw bolts (155) fasten said inflow funnel to said adjusting slider collet,
2) said screw bolts (155) being positioned parallel to the longitudinal axis of the nozzle,
3) the heads of said screw bolts being preferred oblong, and engaging into e.g. grinded-in pockets of said inflow funnel,
4) said screw bolts (155) are protruding from the trailing edge od said adjusting slider collet (4/69), where they are fixed by flow conformal nuts (156),

4. The same inventive package of means, as utilized for the nozzle according to claim 1, being also applied for improving the conventional plug nozzle to a Combi-Supersonic-Adjusting-Nozzle, in order to make also this nozzle compatible with the novel Injector-Centrifuge-Turbine/Jet- Engine.
1) the conventional plug nozzle having a nozzle housing (181), integral with the engine, being cylindrical or slightly divergent, and having on its stream entrance a constriction, after which the inside diameter conically alters into said cylindrical or slightly divergent shape,
2) furthermore includes said conventional plug nozzle a central nozzle plug (182), in the shape of a zeppelin, being round at the stream entrance and convergent at the stream exit, having an outer diameter, which is larger than said entrance constriction of said housing (181),
3) between said entrance constriction of said housing and said entrance rounding of said nozzle plug (182) being formed the nozzle ring throat, with the flow direction through the throat conically from inside to outside, and with the following flow guiding into the general flow direction of the nozzle, by said nozzle housing,
the IMPROVEMENT comprising:
4) four inventively specific features of the nozzle according to claim 1, converting the conventional plug nozzle also into a Combi-Supersonic-Adjusting-Nozzle according to the present invention,
5) the first inventively specific feature being a Laval-nozzle, positioned in the longitudinal axle of the central plug (182),
6) said central nozzle plug (182) getting at the stream entrance a rotary-symmetrical inflow opening (183) for said Laval-nozzle, by which the stream entrance becomes an inflow funnel (5/70), similar to that of claim 1 ,
7) said inflow funnel (5/70) being also made of technical ceramics,
8) said stream exit of said central nozzle plug (182) being made either of a metallic superalloy or of technical ceramics,
9) said Laval-nozzle going straight through the whole length of said central plug (182), with a flow cross-section being dimensioned for the idling operation of the engine,
10) the second inventively specified feature being an operation apparatus (6/88) for adjusting of the Combi-Supersonic-Adjusting-Nozzle, which apparatus is positioned outside of said nozzle in the cold subsonic_flow,
11) said supersonic stream exit of said central plug becomes an adjusting slider collet (4/69), with star-like radially outside pointing supporting stays (152), similar to claim 1, and the outside contour of said adjusting slider collet getting at the starting points of said supporting stays, on both sides of each stay, local recessions (86/90), in accordance with the area rule of the dynamics of compressible fluids,
12) said supporting stays (152) keeping said central plug (182) in position, and being outside attached to an operation ring (60/87) surrounding the nozzle,
13) the radial outer portions of said supporting stays (152) and said operation ring (60/87) being already lying in the cold region of the inducted fresh air flow,
14) to said operation ring (60/87) being attached the mechanical operation apparatus (6/88), by which the above specified aggregate, consisting of said central plug (182), with said Laval-nozzle, supporting stays (152), and operation ring (60/87), being forwardly and rearwardly moved, in order to geometrically change said ring throat of the nozzle, and vary the gas flow area through the nozzle,
15) said nozzle housing (181) having at its stream exit a turbulence intensifier (150), with the shape of a rising corrugation, the corrugation grooves lying parallel to the flow,
16) the third inventively specific feature being small supersonic auxiliary nozzles (148), admitting an initial suction injector (149), in the shape of a ring-gap, round about the nozzle, to intensify the suction effect of the engine,
17) said small supersonic auxiliary nozzles (148) being placed at the ends of small supersonic gas-ducts (147), being attached round about to the outside of said nozzle housing (181), and being inclined in the direction of the main flow of the nozzle,
18) in said small supersonic auxiliary nozzles (148) small oblique shockwaves (174b) are deflecting the flows into the main flow direction of the nozzle, and behind said small shockwaves (174b) the cross-section of said auxiliary nozzles being sidewards spreaded to accelerate supersonically the flow and to enable sidewards directed evading flows (153), what reduces the shock losses,
19) said initial injector (149) at the rear end of said jet engine producing a slower jacket-flow round about the jet stream, to suppress the sound radiated from the engine,
20) the fourth inventively specific feature being a detachable ceramic inflow funnel (5/70),
21) said ceramic inflow funnel (5/70) being fastened to said adjusting slider collet (4/69) by means of screw-bolts (155), positioned parallel to the longitudinal axis of the nozzle,
22) said screw bolts being fixed by flow-conformal nuts (156),
23) said conventional plug nozzle improved by said package of inventive means to a Combi-Supersonic-Adjusting-Nozzle, being also provided for rocket engines.
